# EUROPÄISCHE PATENTSCHRIFT

(11) **EP 1 635 466 B1**
(45) Veröffentlichungstag und Bekanntmachung des Hinweises auf die Patenterteilung: **06.04.2011**
(21) Anmeldenummer: 05016339.3
(22) Anmeldetag: 27.07.2005
(51) Int. Cl.: H03K 19/0175, G06F 3/00

(54) **Digitale Programmierschnittstelle zwischen einem Basisbandprozessor und einem integrierten Hochfrequenzbaustein**
Digital interface between a baseband processor and a high-frequency integrated circuit
Interface numérique entre un processeur de bande de base et un circuit integré à haute fréquence

(30) Priorität: 08.09.2004 DE 102004043520
(43) Veröffentlichungstag der Anmeldung: 15.03.2006
(73) Patentinhaber: Infineon Technologies AG, 85579 Neubiberg (DE)
(72) Erfinder: Grossmann, Timo, 85579 Neubiberg (DE); Stögmüller, Johannes, 4040 Linz (AT)
(74) Vertreter: Patentanwälte Lambsdorff & Lange

(56) Entgegenhaltungen:
- EP-A- 1 213 657
- WO-A-00/42744
- WO-A-02/13186
- WO-A-02/067450
- FOGG A: "DigRF BASEBAND / RF DIGITAL INTERFACE SPECIFICATION" INTERNET CITATION, [Online] 20. Februar 2004 (2004-02-20), XP002325710 Gefunden im Internet: URL:http://146.101.169.51/DigRF%20Standard %20v112.pdf>

## Beschreibung

Die Erfindung betrifft einen Schaltkreis mit einer digitalen Schnittstelle zur Kommunikation mit einer Steuereinrichtung. Die Kommunikation über die Schnittstelle kann auf verschiedenen digitalen Schnittstellen-Standards, wie beispielsweise dem 3W- oder dem DigRF-Standard, basieren. Des Weiteren betrifft die Erfindung ein System mit einem Schaltkreis, einer Steuereinrichtung und einer dazwischen angeordneten digitalen Schnittstelle sowie ein entsprechendes Verfahren.

Moderne integrierte Hochfrequenzbausteine für den Mobilfunk werden in ihrer Funktion nicht mehr über Steuerleitungen angesteuert, sondern kommunizieren mit einem Steuerbaustein (Host) über eine serielle Programmierschnittstelle. In der Regel ist dabei der Basisbandprozessor der Steuerbaustein. Für die Schnittstelle zwischen dem Steuerbaustein und dem integrierten Hochfrequenzbaustein hat sich ein 3-Leitersystem mit einer Taktleitung, einer Datenleitung und einer Freigabeleitung etabliert. Die Freigabeleitung wird in der Fachliteratur häufig als "Strobe-" oder "Enable-Leitung" bezeichnet.

Für die Kommunikation über eine derartige Schnittstelle hat sich als Quasi-Standard der sogenannte 3W-Standard herausgebildet. Gemäß dem 3W-Standard wird die gesamte Kommunikation von dem Steuerbaustein kontrolliert und getrieben. Wenn Daten von dem Steuerbaustein zu dem integrierten Hochfrequenzbaustein transferiert werden sollen, aktiviert der Steuerbaustein die Freigabeleitung, d.h. er setzt die Freigabeleitung auf einen bestimmten, vorgegebenen Wert. Anschließend gibt der Steuerbaustein auf der Taktleitung einen Takt und auf der Datenleitung synchron dazu seriell die Datenbits aus. Sobald die Freigabeleitung wieder zurückgesetzt wird, wird die Ausgabe der Takte und Bits gestoppt. Die während einer aktiven Phase der Freigabeleitung ausgegebenen Bits bilden ein sogenanntes Telegramm. Die Anzahl der pro Telegramm ausgegebenen Bits entspricht der Anzahl der Takte, während welcher die Freigabeleitung aktiviert ist. Die Bits werden nach Möglichkeit so ausgegeben, dass am Hochfrequenzbaustein die Taktflanke immer in der Mitte einer Bitperiode auftritt. Der Hochfrequenzbaustein übernimmt die Bits jeweils mit dieser Flanke, solange die Freigabeleitung aktiviert ist.

Ein Telegramm enthält sowohl Daten- als auch Adressbits. Im 3W-Standard sind die Adressbits üblicherweise am Ende eines Telegramms angeordnet. Dies stellt jedoch keine Einschränkung dar, die Anordnung der Adressbits innerhalb des Telegramms ist nicht von Bedeutung für die vorliegende Erfindung.

Da im 3W-Standard auf der Datenleitung aus dem Hochfrequenzbaustein keine Daten ausgelesen werden können, wurde der DigRF-Standard entwickelt. Eine Schnittstelle nach dem DigRF-Standard besteht aus einem Steuer- und einem Datenteil. Die Datenschnittstelle wird nur benötigt, wenn der Basisbandprozessor die Sende- und Empfangsdaten nicht in der üblichen analogen Form mit dem integrierten Hochfrequenzbaustein austauschen kann. Eine Schnittstelle für die Steuerinformationen ist allerdings immer erforderlich. Diese Schnittstelle ist im DigRF-Standard genauso wie im 3W-Standard als Bus mit drei Leitungen, nämlich einer Takt-, einer Daten- und einer Freigabeleitung, ausgeführt. Das Protokoll, nach welchem im DigRF-Standard Daten über die Schnittstelle transferiert werden, unterscheidet sich von dem Protokoll im 3W-Standard.

Der DigRF-Standard definiert eine maximale Protokolllänge von 32 Bit, die sich folgendermaßen zusammensetzt. Nach der Aktivierung der Freigabeleitung durch den Steuerbaustein erzeugt der Steuerbaustein auf der Datenleitung zunächst ein Lese/Schreib-Bit (R/W-Bit), mit welchem dem integrierten Hochfrequenzbaustein angezeigt wird, ob Daten in den integrierten Hochfrequenzbaustein programmiert oder aus diesem ausgelesen werden sollen. Anschließend überträgt der Steuerbaustein über die Datenleitung eine Adresse mit einer wählbaren Länge. Im Falle eines Schreibzugriffs schließt sich daran die Übertragung von Datenbits an. Die Anzahl der Datenbits pro Telegramm ist grundsätzlich frei wählbar, solange die Anzahl der Datenbits nicht den Maximalwert 32 - 1 - (Anzahl der Adressbits) übersteigt.

Im Falle eines Lesezugriffs wird die Freigabeleitung durch den Steuerbaustein nach dem Senden der Adressbits wieder zurückgesetzt. Der Steuerbaustein gibt jedoch weiterhin Takte auf der Taktleitung aus und erwartet beginnend mit der dritten Taktflanke nach dem letzten Adressbit die Daten von dem integrierten Hochfrequenzbaustein.

Die Druckschrift EP 1 213 657 A2 offenbart einen integrierten Schaltkreis mit einer bidirektionalen Datenleitung, einer Taktsignalleitung und einer Taktaktivierungsleitung. Über die Datenleitung werden mit einem über die Taktsignalleitung übertragenen Takt getaktete Datensignale gesendet, denen jeweils einer von zwei digitalen Schnittstellenstandards zugrunde liegt. Über die Taktaktivierungsleitung wird dabei ein Taktaktivierungssignal übertragen, welches je nach logischem Zustand bestimmt, gemäß welchem digitalen Schnittstellenstandard der integrierte Schaltkreis Datensignale empfangen soll.

Zusammenfassend sind nachfolgend die wesentlichen Unterschiede zwischen dem 3W- und dem DigRF-Standard aufgeführt, wobei für die Erfindung insbesondere die beiden zuerst aufgeführten Unterschiede von Bedeutung sind:
- Im 3W-Standard sind nur Schreibzugriffe auf den integrierten Hochfrequenzbaustein möglich, während im DigRF-Standard auch Lesezugriffe möglich sind.
- Bei gleicher Anzahl von Daten- und Adressbits umfasst ein DigRF-Telegramm aufgrund des Lese/Schreib-Bits ein Bit mehr als im 3W-Standard.
- Die Adressbits sind im 3W-Standard üblicherweise am Ende eines Telegramms und im DigRF-Standard am Anfang eines Telegramms angeordnet.

Da nunmehr zwei verschiedene Standards für die Kommunikation zwischen dem Steuerbaustein und dem Hochfrequenzbaustein zur Verfügung stehen, ist es erstrebenswert, eine Möglichkeit vorzusehen, die es einem Hochfrequenzbaustein erlaubt, sowohl mit nach dem 3W-Standard arbeitenden Steuerbausteinen als auch mit nach dem DigRF-Standard arbeitenden Steuerbausteinen zusammenzuarbeiten. Die Schaffung eines derartigen integrierten Hochfrequenzbausteins ist Aufgabe der vorliegenden Erfindung Ferner soll ein dem gleichen Zweck dienendes Verfahren angegeben werden. Insbesondere soll ein System geschaffen werden, das einen Steuerbaustein und einen Hochfrequenzbaustein mit der oben genannten Eigenschaft aufweist.

Die der Erfindung zugrunde liegende Aufgabenstellung wird durch die Merkmale der unabhängigen Patentansprüche 1, 14 und 15 gelöst. Vorteilhafte Weiterbildungen und Ausgestaltungen der Erfindung sind in den Unteransprüchen angegeben.

Der erfindungsgemäße Schaltkreis weist drei Eingänge und eine Bestimmungseinheit auf.

An einem ersten Eingang wird ein Taktsignal entgegengenommen. Ein zweiter Eingang dient zur Entgegennahme bzw. Ausgabe eines Datenworts, welches von einer Steuereinrichtung ausgegeben wird. Das Datenwort enthält Informationen über einen Lese- oder Schreibzugriff, mittels welchem Daten aus dem Schaltkreis ausgelesen werden sollen oder in den Schaltkreis geschrieben werden sollen. Zu diesem Zweck weist der Schaltkreis vorteilhafterweise eine Speichereinheit auf. An einem dritten Eingang wird ein Freigabesignal entgegengenommen. Das Freigabesignal weist während genau der Zeitspanne einen vorgegebenen Wert auf, während welcher das Datenwort von dem Schaltkreis entgegengenommen wird. Außerhalb dieser Zeitspanne weist das Freigabesignal einen anderen Wert auf.

Die Bestimmungseinheit bestimmt die Zeitdauer, die benötigt wird, um das Datenwort an dem dritten Eingang entgegenzunehmen. Dazu zählt die Bestimmungseinheit die Anzahl der Takte des Taktsignals, während welcher das Freigabesignal den vorgegebenen Wert aufweist. Anhand der so gewonnenen Taktzahl ermittelt die Bestimmungseinheit, welcher digitale Schnittstellen-Standard dem entgegengenommenen Datenwort zugrunde liegt.

Damit die Bestimmungseinheit eine Unterscheidung hinsichtlich des digitalen Schnittstellen-Standards vornehmen kann, müssen sich die von der Steuereinheit zu dem erfindungsgemäßen Schaltkreis übertragenen Datenwörter bezüglich des ihnen jeweils zugrunde liegenden digitalen Schnittstellen-Standards unterscheiden. Und zwar müssen sich die Datenwörter so unterscheiden, dass aus der jeweiligen Übertragungsdauer auf den zugrunde liegenden digitalen Schnittstellen-Standard geschlossen werden kann.

Der Vorteil der Erfindung liegt darin, dass die innere Funktionalität des erfindungsgemäßen Schaltkreises nicht von der Schnittstelle mit der Steuereinrichtung abhängen muss, d.h. die Anzahl, der Inhalt, die Adressen und die Länge der internen, insbesondere schreibbaren Register ändert sich für den erfindungsgemäßen Schaltkreis nicht, wenn er beispielsweise über einen 3W-Bus oder über einen DigRF-Bus angesteuert wird. Der erfindungsgemäße Schaltkreis muss also nicht von vornherein für einen bestimmten digitalen Schnittstellen-Standard ausgelegt werden, sondern er kann universell bei verschiedenen digitalen Schnittstellen-Standards zum Einsatz kommen.

Damit die Bestimmungseinheit die entgegengenommenen Datenwörter hinsichtlich des zugrunde liegenden digitalen Schnittstellen-Standards unterscheiden kann, ist es vorteilhaft, wenn die Wortbreiten der Datenwörter von den ihnen zugrunde liegenden digitalen Schnittstellen-Standards abhängen. Jedem digitalen Schnittstellen-Standard, welcher für die Übertragung des Datenworts in Frage kommt, sind vorzugsweise eine oder mehrere Wortbreiten eindeutig zugeordnet. Durch diese Maßnahme wird sichergestellt, dass die Bestimmungseinheit bei einer festen Datenrate anhand der Wortbreite des entgegengenommenen Datenworts auf den zugrunde liegenden digitalen Schnittstellen-Standard zurückschließen kann.

Des Weiteren ist es von Vorteil, die Bestimmungseinheit so auszulegen, dass sie anhand der Anzahl der Takte des Taktsignals, während welcher das Freigabesignal den vorgegebenen Wert aufweist, auch feststellen kann, ob mit dem während dieser Takte entgegengenommenen Datenwort ein Lese- oder ein Schreibzugriff auf den erfindungsgemäßen Schaltkreis verbunden ist.

Um eine Unterscheidung hinsichtlich eines Lese- oder Schreibzugriffs durchführen zu können, hängt die Wortbreite des Datenworts vorzugsweise von der Art des Zugriffs ab.

Die vorstehend aufgeführten Maßnahmen können vorteilhafterweise auch miteinander kombiniert werden. So kann jeder Kombination aus digitalem Schnittstellen-Standard und Zugriffsart eine bestimmte Wortlänge zugewiesen werden, sodass die Bestimmungseinheit beim Empfang eines Datenworts eindeutig sowohl den zugrunde liegenden Schnittstellen-Standard als auch die Art des Zugriffs ermitteln kann.

Eine weitere bevorzugte Ausgestaltung des erfindungsgemäßen Schaltkreises sieht vor, dass die Bestimmungseinheit anhand der Anzahl der Takte des Taktsignals, während welcher das Freigabesignal den vorgegebenen Wert aufweist, auch bestimmen kann, ob bei der Übertragung des Datenworts ein Fehler aufgetreten ist. Dies kann beispielsweise dadurch geschehen, dass eine Anzahl möglicher Wortbreiten vorgegeben ist. Wird ein Datenwort mit einer anderen Wortbreite empfangen, muss bei der Übertragung dieses Datenworts demnach ein Fehler aufgetreten sein.

Des Weiteren kann vorzugsweise vorgesehen sein, dass das Datenwort Adressinformationen enthält. Die Adressinformationen geben an, unter welcher Adresse die zu lesenden oder die zu schreibenden Daten innerhalb des Schaltkreises abgelegt sind oder abgelegt werden sollen. Insbesondere enthält jedes Datenwort eine vorgegebene Anzahl von Adressbits, d.h. die Anzahl der Adressbits ist unabhängig von dem digitalen Schnittstellen-Standard und unabhängig von der Art des Zugriffs für jedes Datenwort gleich. Eine konstante Anzahl von Adressbits erleichtert die Verarbeitung der Adressinformationen, da die Verarbeitung Schnittstellen- und Zugriffs-unabhängig durchgeführt werden kann.

Gemäß einer weiteren bevorzugten Ausgestaltung des erfindungsgemäßen Schaltkreises enthält das Datenwort - sofern Daten in den erfindungsgemäßen Schaltkreis geschrieben werden sollen - die zu schreibenden Daten. Insbesondere enthält jedes Datenwort bei einem Schreibzugriff eine vorgegebene Anzahl von Datenbits. Folglich kann die Verarbeitung der Datenbits unabhängig vom Schnittstellen-Standard vorgenommen werden.

Es ist des Weiteren von Vorteil, wenn ein Datenwort Steuerinformationen aufweist, die angeben, ob ein Lese- oder ein Schreibzugriff durchgeführt werden soll. Derartige Steuerinformationen sind jedoch nur dann notwendig, wenn der zugrunde liegende digitale Schnittstellen-Standard, wie z.B. der DigRF-Standard, sowohl Lese- als auch Schreibzugriffe zulässt. Bei einem Schnittstellen-Standard, der nur einen Schreibzugriff vorsieht, wie z.B. dem 3W-Standard, kann auf die Steuerinformationen verzichtet werden. Beim DigRF-Standard bestehen die Steuerinformationen aus dem Lese/Schreib-Bit.

Sofern Steuerinformationen vorgesehen sind, können die Steuerinformationen vorteilhafterweise auch dazu eingesetzt werden, dass die Bestimmungseinheit anhand der Steuerinformationen bestimmt, ob bei der Übertragung des Datenworts ein Fehler aufgetreten ist.

Der erfindungsgemäße Schaltkreis umfasst vorzugsweise ein Schieberegister, in welches ein entgegengenommenes Datenwort geschrieben wird. Aus dem Schieberegister kann das Datenwort zur weiteren Verarbeitung wieder ausgelesen werden, sobald die Bestimmungseinheit den zugrunde liegenden Schnittstellen-Standard und die Art des Zugriffs auf den erfindungsgemäßen Schaltkreis bestimmt hat.

Das Taktsignal wird vorteilhafterweise von der Steuereinrichtung bereitgestellt.

Bei den digitalen Schnittstellen-Standards, die zur Übertragung der Datenwörter zwischen der Steuereinrichtung und dem erfindungsgemäßen Schaltkreis in Frage kommen, handelt es sich vorzugsweise um den 3W- und den DigRF-Standard.

Der erfindungsgemäße Schaltkreis kann auf einem gemeinsamen Substrat integriert sein und insbesondere ein im Mobilfunkbereich eingesetzter Hochfrequenzschaltkreis sein. Ferner kann es sich bei der Steuereinrichtung um einen Host handeln, welcher insbesondere ein für den Mobilfunk ausgelegter Basisbandprozessor ist.

Das erfindungsgemäße System dient zum Erzeugen von Lese- oder Schreibzugriffen. Dazu umfasst das erfindungsgemäße System die oben bereits erwähnte Steuereinrichtung und einen erfindungsgemäßen Schaltkreis. Die Steuereinrichtung erzeugt ein Datenwort, welches Informationen über einen Lese- oder Schreibzugriff auf den Schaltkreis umfasst. Dieses Datenwort wird von dem Schaltkreis entgegengenommen. Anschließend kann der Schaltkreis - wie bereits oben erläutert wurde - anhand des Datenworts bzw. dessen Empfangsdauer feststellen, nach welchem digitalen Schnittstellen-Standard das Datenwort übertragen wurde.

Mittels des erfindungsgemäßen Verfahrens wird der digitale Schnittstellen-Standard bestimmt, welcher einem Lese- oder Schreibzugriff einer Steuereinrichtung auf einen Schaltkreis zugrunde liegt. Dazu umfasst das erfindungsgemäße Verfahren die folgenden Verfahrensschritte:
(a) Entgegennehmen eines Taktsignals durch den Schaltkreis;
(b) Entgegennehmen eines Datenworts durch den Schaltkreis, wobei das Datenwort von der Steuereinrichtung ausgegeben wird und Informationen über einen Lese- oder Schreibzugriff auf den Schaltkreis umfasst;
(c) Entgegennehmen eines Freigabesignals durch den Schaltkreis, wobei das Freigabesignal während der Übertragung des Datenworts einen vorgegebenen Wert aufweist; und
(d) Bestimmen des digitalen Schnittstellen-Standards, der dem übertragenen Datenwort zugrunde liegt, anhand der Anzahl der Takte des Taktsignals, während welcher das Freigabesignal den vorgegebenen Wert aufweist.

Die Erfindung wird nachfolgend in beispielhafter Weise unter Bezugnahme auf die Zeichnungen näher erläutert. In diesen zeigen:
- Fig. 1: eine schematische Darstellung der Übertragung eines Telegramms im 3W-Standard;
- Fig. 2: eine schematische Darstellung eines Schreibzugriffs im DigRF-Standard;
- Fig. 3: eine schematische Darstellung eines Lesezugriffs im DigRF-Standard; und
- Fig. 4: eine Blockschaltbild einer in einem integrierten Hochfrequenzbaustein angeordneten Schnittstelle zur Kommunikation mit einem Basisbandprozessor als Ausführungsbeispiel der Erfindung.

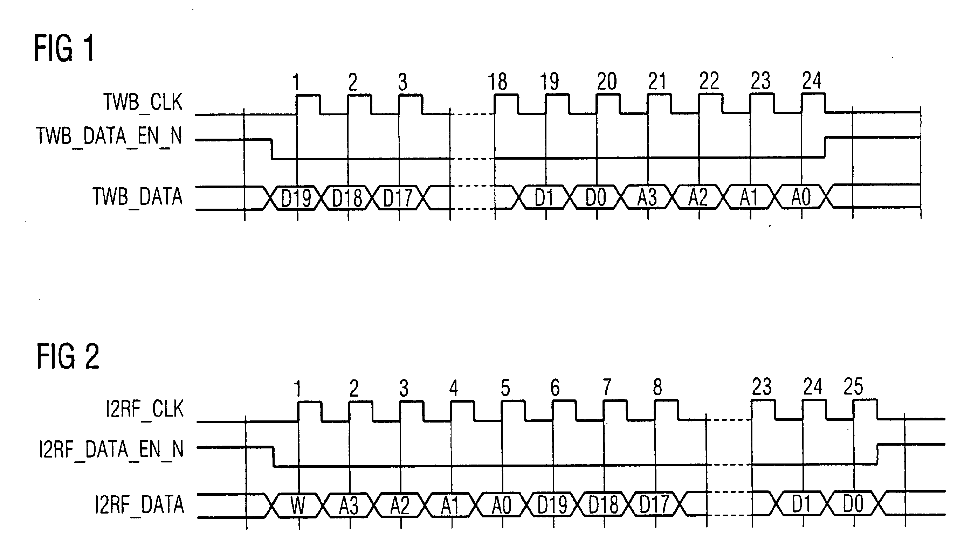

In Fig. 1 ist schematisch das Protokoll zur Übertragung eines Telegramms von einem Steuerbaustein zu einem integrierten Hochfrequenzbaustein im 3W-Standard dargestellt. Aus Fig. 1 ist ersichtlich, dass der Steuerbaustein mit Beginn der Ausgabe eines Freigabesignals TWB_DATA_EN_N einen Takt TWB_CLK ausgibt. Ferner werden über eine Datenleitung die Bits des Telegramms TWB_DATA ausgegeben. Die Anzahl der Bits des Telegramms TWB_DATA entspricht der Anzahl der ausgegebenen Takte TWB_CLK. Vorliegend weist das Telegramm TWB_DATA eine Länge von 24 Bits auf, wobei 20 Bits auf die Daten und 4 Bits auf die Adresse entfallen.

Die Takte TWB_CLK werden so ausgegeben, dass nach Möglichkeit an dem integrierten Hochfrequenzbaustein die Taktflanke stets in der Mitte einer Bitperiode auftritt. Der integrierte Hochfrequenzbaustein übernimmt das Datenbit mit dieser Flanke, solange das Freigabesignal TWB_DATA_EN_N aktiviert ist.

Sobald die Übermittlung der Bits des Telegramms TWB_DATA abgeschlossen ist, wird das Freigabesignal TWB_DATA_EN_N wieder zurückgesetzt und das Taktsignal TWB_CLK gestoppt.

In Fig. 2 ist schematisch das Protokoll eines Schreibzugriffs eines Steuerbausteins auf einen integrierten Hochfrequenzbaustein im DigRF-Standard dargestellt. Das in Fig. 2 gezeigte Taktsignal I2RF_CLK und das Freigabesignal I2RF_DATA_EN_N entsprechen jeweils im Wesentlichen dem in Fig. 1 gezeigten Taktsignal TWB_CLK und dem Freigabesignal TWB_DATA_EN_N.

Mittels eines Telegramms I2RF_DATA werden vorliegend genauso wie in Fig. 1 20 Datenbits und 4 Adressbits übertragen, wobei jedoch im Vergleich zum 3W-Standard die Reihenfolge der Daten- und Adressbits vertauscht ist. Einen weiteren Unterscheid zum 3W-Standard stellt das zu Beginn eines Telegramms 12RF_DATA ausgegebene Lese/Schreib-Bit dar. Da es sich bei dem in Fig. 2 dargestellten Zugriff um einen Schreibzugriff auf den integrierten Hochfrequenzbaustein handelt, steht zu Beginn des Telegramms I2RF_DATA ein Schreib-Bit W.

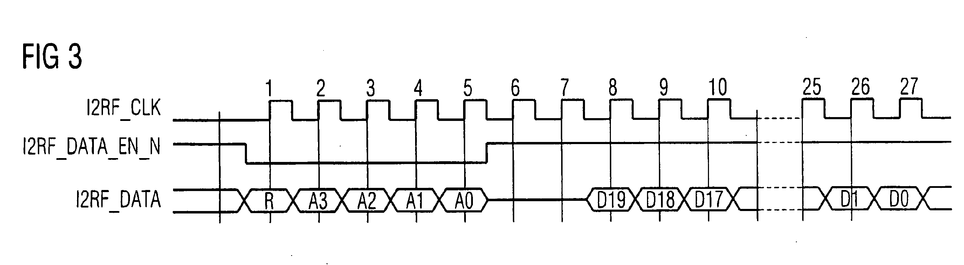

In Fig. 3 ist schematisch das Protokoll eines Lesezugriffs eines Steuerbausteins auf einen integrierten Hochfrequenzbaustein im DigRF-Standard dargestellt. Zu Beginn eines Lesezugriffs wird von dem Steuerbaustein ein Lese-Bit R ausgegeben. Nach der Ausgabe der Adressbits wird das Freigabesignal 12RF_DATA_EN_N wieder zurückgesetzt. Es wird von dem Steuerbaustein jedoch weiterhin das Taktsignal I2RF_CLK ausgegeben. Beginnend mit der dritten Taktflanke nach dem letzten Adressbit A0 gibt der integrierte Hochfrequenzbaustein Datenbits aus, welche der Steuerbaustein mit der ansteigenden Flanke des Taktsignals I2RF_CLK übernimmt.

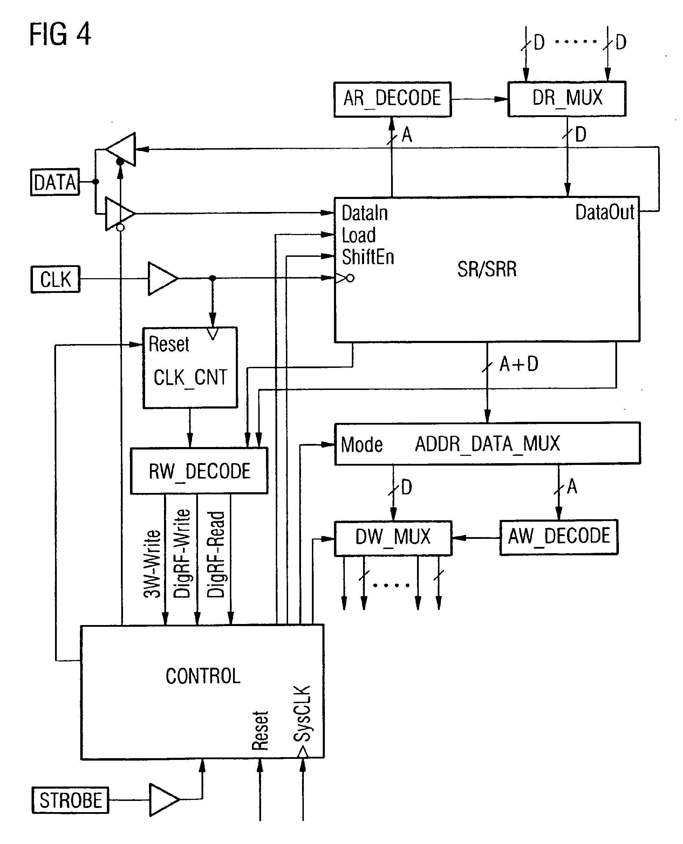

In Fig. 4 ist das Blockschaltbild eines Teils eines integrierten Hochfrequenzbausteins als Ausführungsbeispiel des erfindungsgemäßen integrierten Schaltkreises dargestellt. Eingänge CLK und STROBE sowie ein kombinierter Ein- und Ausgang DATA des integrierten Hochfrequenzbausteins bilden eine serielle Programmierschnittstelle zu einem in Fig. 4 nicht dargestellten Basisbandprozessor als Steuerbaustein. Die Kommunikation über diese serielle Programmierschnittstelle kann nach dem 3W- oder dem DigRF-Standard erfolgen. In den Eingang CLK geht das Taktsignal TWB_CLK bzw. I2RF_CLK ein, und in den Eingang STROBE geht das Freigabesignal TWB_DATA_EN_N bzw. I2RF_DATA_EN_N ein. Der Ein- und Ausgang DATA dient zur Ein- bzw. Ausgabe der Daten TWB_DATA bzw. I2RF_DATA.

Nach der Aktivierung des an dem Eingang STROBE anliegenden Freigabesignals TWB_DATA_EN_N bzw. I2RF_DATA_EN_N durch den Basisbandprozessor liest der integrierte Hochfrequenzbaustein eine Anzahl von Bits, die der Anzahl der während der Aktivierung des Freigabesignals TWB_DATA_EN_N bzw. 12RF_DATA_EN_N über den Eingang CLK empfangenen Takte TWB_CLK bzw. 12RF_CLK entspricht, von dem Eingang DATA in ein Schieberegister SR ein. Ein Taktzähler CLK_CNT zählt dabei die Anzahl der Takte TWB_CLK bzw. I2RF_CLK. Nach der Deaktivierung des Freigabesignals TWB_DATA_EN_N bzw. I2RF_DATA_EN_N wertet eine Auswerteeinheit RW_DECODE den Stand des Taktzählers CLK_CNT aus.

Beim Datentransfer über die vorliegende serielle Programmierschnittstelle wird vorausgesetzt, dass die Anzahl N der Datenbits und der Adressbits unabhängig vom Protokoll-Standard konstant ist. Dies bedeutet, dass ein Telegramm im 3W-Standard stets die Länge N aufweist, während ein Schreibzugriff im DigRF-Standard eine Länge von N+1 aufweist, da zusätzlich zu den Daten- und Adressbits noch ein Schreib-Bit W übertragen wird. Demgegenüber ist bei einem Lesezugriff im DigRF-Standard das am Eingang STROBE empfangene Freigabesignal I2RF_DATA_EN_N nur während A+1 Bits bzw. Takten I2RF_CLK aktiviert, wobei A für die Anzahl der Adressbits steht.

Gemäß den obigen Fällen sind die Werte N, N+1 und A+1 gültige Werte für den Stand des Taktzählers CLK_CNT, nachdem das Freigabesignal TWB_DATA_EN_N bzw. I2RF_DATA_EN_N am Eingang STROBE wieder zurückgesetzt worden ist. Alle anderen Werte deuten auf einen fehlerhaft abgelaufenen Buszyklus hin und können z.B. eine spezielle Fehlerbehandlung auslösen.

Aufgrund der eindeutigen Zuordnung der drei möglichen gültigen Zählerstände des Taktzählers CLK_CNT kann die Auswerteeinheit RW_DECODE nach Abschluss der aktiven Phase des Freigabesignals TWB_DATA_EN_N bzw. I2RF_DATA_EN_N anhand des Stands des Taktzählers CLK_CNT auf den dem Datentransfer zugrunde liegenden Protokoll-Standard schließen. Sofern es sich um den DigRF-Standard handelt, kann die Auswerteinheit RW_DECODE ferner Schreib- und Lesezugriffe unterscheiden.

Die Länge des Schieberegisters SR kann N oder N+1 betragen. Wenn das Schieberegister SR nur N Bit lang ist, wird im Fall des DigRF-Standards das zuerst gesendete Lese/Schreib-Bit R/W mit dem Empfang des letzten Datenbits am Ende des Schieberegisters SR hinausgeschoben und geht verloren. Dies kann toleriert werden, da Lese- und Schreibzugriffe durch die mitgezählten Takte unterschieden werden können. Vorteilhafter ist es jedoch, das Schieberegister SR ein Bit länger, d.h. mit einer Länge von N+1 Bit, auszulegen und das Lese/Schreib-Bit R/W nicht zu verwerfen. Das Lese/Schreib-Bit R/W kann dann zusätzlich in die Konsistenzprüfung hinsichtlich eines fehlerfrei abgelaufenen Buszyklus einbezogen werden.

Nachdem durch die Auswerteeinheit RW_DECODE erkannt wurde, ob der 3W- oder der DigRF-Standard vorliegt, kann bei einem Schreibzugriff eine dem Schieberegister SR nachgeschaltete Adress-/Datenmultiplexereinheit ADDR_DATA_MUX den jeweils richtigen Teil des empfangenen Telegramms TWB_DATA bzw. I2RF_DATA an ihre ausgangsseitig angeordneten Adress- und Datenleitungen weiterleiten. Insbesondere ist dabei zu beachten, dass im Unterschied zum 3W-Standard beim DigRF-Standard die Adressbits vor den Datenbits ausgesendet werden. Die Adressbits werden an einen Adressdecoder AW_DECODE weitergeleitet, und die Datenbits werden einer Datenmultiplexereinheit DW_MUX zugeführt. In Abhängigkeit von der durch den Adressdecoder AW_DECODE ermittelten Adresse leitet die Datenmultiplexereinheit DW_MUX die empfangenen Datenbits mit einem Übernahmesignal an das ausgewählte interne Zielregister weiter.

Bei einem gültigen Lesezugriff im DigRF-Standard, d.h. bei einem Zählerstand von A+1 des Taktzählers CLK_CNT, werden die empfangenen Adressbits einem Adressdecoder AR_DECODE übergeben, welcher über eine Datenmultiplexereinheit DR_MUX ein entsprechendes internes Leseregister auswählt. Der Inhalt dieses Leseregisters wird anschließend mit einem Load-Signal in ein Schieberegister SRR kopiert, um mit den folgenden, von dem Basisbandprozessor generierten Takten des Taktsignals I2RF_CLK am Ausgang DATA hinausgeschoben zu werden. Der Taktzähler CLK_CNT zählt diese Takte wiederum mit. Grundsätzlich können die Schieberegister SR und SRR durch ein einziges Schieberegister realisiert werden.

In Abhängigkeit von der Datentransferrichtung muss der integrierte Hochfrequenzbaustein den kombinierten Ein- und Ausgang DATA entweder als Eingang oder als Ausgang beschalten. Zu Beginn eines Zyklus muss der Ein- und Ausgang DATA als Eingang beschaltet sein, damit ein eingehendes Telegramm TWB_DATA bzw. I2RF_DATA empfangen werden kann. Bei einem festgestellten Lesezugriff auf den integrierten Hochfrequenzbaustein muss der Ein- und Ausgang DATA vor der Ausgabe der in dem Schieberegister SRR abgelegten Daten als Ausgang beschaltet werden. Dies kann bereits nach der Deaktivierung der Freigabeleitung STROBE geschehen. Nach der Beendigung des Lesezugriffs muss der Ein- und Ausgang DATA wieder als Eingang beschaltet werden.

Da der Taktzähler CLK_CNT auch beim Auslesen von Daten die Takte des Taktsignals I2RF_CLK mitzählt, wird das Ende des Lesezugriffs daran erkannt, dass der Taktzähler CLK_CNT einen bestimmten maximalen Wert erreicht hat. Demgegenüber reicht als Bedingung für das Ende eines Schreibzugriffs bereits die Deaktivierung der Freigabeleitung STROBE. Nach der Beendigung eines Buszyklus wird der Taktzähler CLK_CNT wieder auf Null zurückgesetzt.

Die gesamte Ablaufsteuerung und die Koordination der vorstehend beschriebenen Vorgänge wird von einer Steuereinheit CONTROL übernommen. Die Steuereinheit CONTROL führt die notwendigen Steuerungen in Abhängigkeit von dem Pegel des Freigabesignals TWB_DATA_EN_N bzw. 12RF_DATA_EN_N und in Abhängigkeit von den Ausgabewerten der Auswerteeinheit RW_DECODE durch. Zu diesem Zweck erhält die Steuereinheit CONTROL von der Auswerteeinheit RW_DECODE Signale 3W-Write, DigRF-Write und DigRF-Read, welche Auskunft über den Protokoll-Standard und die Art des Zugriffs geben. Insbesondere steuert die Steuereinheit CONTROL das Zurücksetzen (Reset) des Taktzählers CLK_CNT, den Modus (Mode) der Adress-/Datenmultiplexereinheit ADDR_DATA_MUX, das durch die Datenmultiplexereinheit DW_MUX ausgegebene Übernahmesignal, das Load- und das ShiftEn-Signal der Schieberegister SR und SRR sowie die Richtung des kombinierten Ein- und Ausgangs DATA.

Zu ihrem Betrieb benötigt die Steuereinheit CONTROL ein in dem integrierten Hochfrequenzbaustein vorhandenes Taktsignal als Systemtakt. Prinzipiell könnte die Steuereinheit CONTROL allerdings auch mit Hilfe einer Self-Timed-Logik aufgebaut sein, wodurch das genannte Taktsignal entfallen könnte. Damit die Steuereinheit CONTROL nach dem Einschalten des integrierten Hochfrequenzbauteils ihre Funktion in einem definierten Anfangszustand beginnen kann, ist ein Reset-Signal vorgesehen, welches von einem Power-On-Reset-Generator innerhalb des integrierten Hochfrequenzbauteils generiert wird.

## Patentansprüche

1. Schaltkreis mit
- einem ersten Eingang (CLK) zur Entgegennahme eines Taktsignals (TWB_CLK, I2RF_CLK),
- einem zweiten Eingang (DATA) zur Entgegennahme eines Datenworts (TWB_DATA, I2RF_DATA), welches von einer Steuereinrichtung ausgegeben wird und welches Informationen über einen Lese- oder Schreibzugriff auf den Schaltkreis umfasst,
- einem dritten Eingang (STROBE) zur Entgegennahme eines Freigabesignals (TWB_DATA_EN_N, I2RF_DATA_EN_N), welches während der Übertragung des Datenworts (TWB_DATA, I2RF_DATA) einen vorgegebenen Wert aufweist, und
- einer Bestimmungseinheit (CLK_CNT, RW_DECODE), welche derart ausgeführt ist, dass sie anhand der Anzahl der Takte des Taktsignals (TWB_CLK, I2RF_CLK), während welcher das Freigabesignal (TWB_DATA_EN_N, I2RF_DATA_EN_N) den vorgegebenen Wert aufweist, bestimmt, welcher digitale Schnittstellen-Standard dem während dieser Takte übertragenen Datenwort (TWB_DATA, I2RF_DATA) zugrunde liegt.

2. Schaltkreis nach Anspruch 1,
**dadurch gekennzeichnet,**
- **dass** die Wortbreite des Datenworts (TWB_DATA, I2RF_DATA) von dem ihm zugrunde liegenden digitalen Schnittstellen-Standard abhängt, und
- **dass** für die digitalen Schnittstellen-Standards, welche für die Übertragung des Datenworts (TWB_DATA, I2RF_DATA) in Frage kommen, jeweils eine oder mehrere Wortbreiten vorgegeben sind.

3. Schaltkreis nach Anspruch 1 oder 2,
**dadurch gekennzeichnet,**
- **dass** die Bestimmungseinheit (CLK_CNT, RW_DECODE) ferner derart ausgeführt ist, dass sie anhand der Anzahl der Takte des Taktsignals (TWB_CLK, I2RF_CLK), während welcher das Freigabesignal (TWB_DATA_EN_N, I2RF_DATA_EN_N) den vorgegebenen Wert aufweist, bestimmt, ob ein Lese- oder ein Schreibzugriff mit dem Datenwort (TWB_DATA, I2RF_DATA) verbunden ist.

4. Schaltkreis nach Anspruch 3,
**dadurch gekennzeichnet,**
- **dass** die Wortbreite des Datenworts (TWB_DATA, I2RF_DATA) davon abhängt, ob ein Lese- oder ein Schreibzugriff mit dem Datenwort (TWB_DATA, I2RF_DATA) verbunden ist.

5. Schaltkreis nach einem oder mehreren der vorhergehenden Ansprüche,
**dadurch gekennzeichnet,**
- **dass** die Bestimmungseinheit (CLK_CNT, RW_DECODE) ferner derart ausgeführt ist, dass sie anhand der Anzahl der Takte des Taktsignals (TWB_CLK, I2RF_CLK), während welcher das Freigabesignal (TWB_DATA_EN_N, I2RF_DATA_EN_N) den vorgegebenen Wert aufweist, bestimmt, ob bei der Übertragung des Datenworts (TWB_DATA, I2RF_DATA) ein Fehler aufgetreten ist.

6. Schaltkreis nach einem oder mehreren der vorhergehenden Ansprüche,
**dadurch gekennzeichnet,**
- **dass** das Datenwort (TWB_DATA, I2RF_DATA) Adressinformationen darüber aufweist, unter welcher Adresse die zu lesenden oder die zu schreibenden Daten abgelegt sind oder abgelegt werden sollen, wobei das Datenwort (TWB_DATA, I2RF_DATA) insbesondere eine vorgegebene Anzahl von Adressbits aufweist.

7. Schaltkreis nach einem oder mehreren der vorhergehenden Ansprüche,
**dadurch gekennzeichnet,**
- **dass** das Datenwort (TWB_DATA, I2RF_DATA) bei einem Schreibzugriff die zu schreibenden Daten umfasst, wobei das Datenwort (TWB_DATA, I2RF_DATA) bei einem Schreibzugriff insbesondere eine vorgegebene Anzahl von Datenbits aufweist.

8. Schaltkreis nach einem oder mehreren der vorhergehenden Ansprüche,
**dadurch gekennzeichnet,**
- **dass** das Datenwort (TWB_DATA, I2RF_DATA) in Abhängigkeit von dem zugrunde liegenden Schnittstellen-Standard Steuerinformationen darüber aufweist, ob ein Lese- oder ein Schreibzugriff durchgeführt wird.

9. Schaltkreis nach den Ansprüchen 5 und 8,
**dadurch gekennzeichnet,**
- **dass** die Bestimmungseinheit (CLK_CNT, RW_DECODE) ferner derart ausgeführt ist, dass sie anhand der Steuerinformationen bestimmt, ob bei der Übertragung des Datenworts (TWB_DATA, I2RF_DATA) ein Fehler aufgetreten ist.

10. Schaltkreis nach einem oder mehreren der vorhergehenden Ansprüche,
**dadurch gekennzeichnet,**
- **dass** der Schaltkreis ein Schieberegister (SR) aufweist, in welches ein entgegengenommenes Datenwort (TWB_DATA, I2RF_DATA) geschrieben wird.

11. Schaltkreis nach einem oder mehreren der vorhergehenden Ansprüche,
**dadurch gekennzeichnet,**
- **dass** das Taktsignal (TWB_CLK, I2RF_CLK) von der Steuereinrichtung bereitgestellt wird.

12. Schaltkreis nach einem oder mehreren der vorhergehenden Ansprüche,
**dadurch gekennzeichnet,**
- **dass** es sich bei einem der digitalen Schnittstellen-Standards um den DigRF-Standard handelt.

13. Schaltkreis nach einem oder mehreren der vorhergehenden Ansprüche,
**dadurch gekennzeichnet,**
- **dass** der Schaltkreis auf einem gemeinsamen Substrat integriert ist und insbesondere ein Hochfrequenzschaltkreis ist, und/oder
- **dass** die Steuereinrichtung ein Host und insbesondere ein Basisbandprozessor ist.

14. System zum Erzeugen von Lese- oder Schreibzugriffen, mit einer Steuereinrichtung zur Erzeugung eines Datenworts (TWB_DATA, I2RF_DATA), welches Informationen über einen Lese- oder Schreibzugriff umfasst, und einem Schaltkreis nach einem oder mehreren der vorhergehenden Ansprüche, welcher das Datenwort (TWB_DATA, I2RF_DATA) entgegennimmt.

15. Verfahren zum Bestimmen eines digitalen Schnittstellen-Standards, welcher einem Lese- oder Schreibzugriff einer Steuereinrichtung auf einen Schaltkreis zugrunde liegt, mit den Schritten:
(a) Entgegennehmen eines Taktsignals (TWB_CLK, I2RF_CLK) durch den Schaltkreis;
(b) Entgegennehmen eines Datenworts (TWB_DATA, I2RF_DATA) durch den Schaltkreis, wobei das Datenwort (TWB_DATA, I2RF_DATA) von der Steuereinrichtung ausgegeben wird und Informationen über einen Lese- oder Schreibzugriff auf den Schaltkreis umfasst;
(c) Entgegennehmen eines Freigabesignals (TWB_DATA__EN_N, I2RF_DATA_EN_N) durch den Schaltkreis, wobei das Freigabesignal (TWB_DATA_EN_N, I2RF_DATA_EN_N) während der Übertragung des Datenworts (TWB_DATA, I2RF_DATA) einen vorgegebenen Wert aufweist; und
(d) Bestimmen des digitalen Schnittstellen-Standards, der dem übertragenen Datenwort (TWB_DATA, I2RF_DATA) zugrunde liegt, anhand der Anzahl der Takte des Taktsignals (TWB_CLK, I2RF_CLK), während welcher das Freigabesignal (TWB_DATA_EN_N, I2RF_DATA_EN_N) den vorgegebenen Wert aufweist.

16. Verfahren nach Anspruch 15,
**dadurch gekennzeichnet,**
- **dass** die Wortbreite des Datenworts (TWB_DATA, I2RF_DATA) von dem ihm zugrunde liegenden digitalen Schnittstellen-Standard abhängt, und
- **dass** für die digitalen Schnittstellen-Standards, welche für die Übertragung des Datenworts (TWB_DATA, I2RF_DATA) in Frage kommen, jeweils eine oder mehrere Wortbreiten vorgegeben sind.

17. Verfahren nach Anspruch 15 oder 16,
**dadurch gekennzeichnet,**
- **dass** anhand der Anzahl der Takte des Taktsignals (TWB_CLK, I2RF_CLK), während welcher das Freigabesignal (TWB_DATA_EN_N, I2RF_DATA_EN_N) den vorgegebenen Wert aufweist, bestimmt wird, ob ein Lese- oder ein Schreibzugriff mit dem Datenwort (TWB_DATA, I2RF_DATA) verbunden ist.

18. Verfahren nach Anspruch 17,
**dadurch gekennzeichnet,**
- **dass** die Wortbreite des Datenworts (TWB_DATA, I2RF_DATA) davon abhängt, ob ein Lese- oder ein Schreibzugriff mit dem Datenwort (TWB_DATA, I2RF_DATA) verbunden ist.

19. Verfahren nach einem oder mehreren der Ansprüche 15 bis 18,
**dadurch gekennzeichnet,**
- **dass** anhand der Anzahl der Takte des Taktsignals (TWB_CLK, I2RF_CLK), während welcher das Freigabesignal (TWB_DATA_EN_N, I2RF_DATA_EN_N) den vorgegebenen Wert aufweist, bestimmt wird, ob bei der Übertragung des Datenworts (TWB_DATA, I2RF_DATA) ein Fehler aufgetreten ist.

20. Verfahren nach einem oder mehreren der Ansprüche 15 bis 19,
**dadurch gekennzeichnet,**
- **dass** das Datenwort (TWB_DATA, I2RF_DATA) Adressinformationen darüber aufweist, unter welcher Adresse die zu lesenden oder die zu schreibenden Daten abgelegt sind oder abgelegt werden sollen, wobei das Datenwort (TWB_DATA, I2RF_DATA) insbesondere eine vorgegebene Anzahl von Adressbits aufweist.

21. Verfahren nach einem oder mehreren der Ansprüche 15 bis 20,
**dadurch gekennzeichnet,**
- **dass** das Datenwort (TWB_DATA, I2RF_DATA) bei einem Schreibzugriff die zu schreibenden Daten umfasst, wobei das Datenwort (TWB_DATA, I2RF_DATA) bei einem Schreibzugriff insbesondere eine vorgegebene Anzahl von Datenbits aufweist.

22. Verfahren nach einem oder mehreren der Ansprüche 15 bis 21,
**dadurch gekennzeichnet,**
- **dass** das Datenwort (TWB_DATA, I2RF_DATA) in Abhängigkeit von dem zugrunde liegenden Schnittstellen-Standard Steuerinformationen darüber aufweist, ob ein Lese- oder ein Schreibzugriff durchgeführt wird.

23. Verfahren nach den Ansprüchen 19 und 22,
**dadurch gekennzeichnet,**
- **dass** anhand der Steuerinformationen bestimmt wird, ob bei der Übertragung des Datenworts (TWB_DATA, I2RF_DATA) ein Fehler aufgetreten ist.

24. Verfahren nach einem oder mehreren der Ansprüche 15 bis 23,
**dadurch gekennzeichnet,**
- **dass** der Schaltkreis ein Schieberegister (SR) aufweist, in welches ein entgegengenommenes Datenwort (TWB_DATA, I2RF_DATA) geschrieben wird.

25. Verfahren nach einem oder mehreren der Ansprüche 15 bis 24,
**dadurch gekennzeichnet,**
- **dass** das Taktsignal (TWB_CLK, I2RF_CLK) von der Steuereinrichtung bereitgestellt wird.

26. Verfahren nach einem oder mehreren der Ansprüche 15 bis 25,
**dadurch gekennzeichnet,**
- **dass** es sich bei einem der digitalen Schnittstellen-Standards um den DigRF-Standard handelt.

27. Verfahren nach einem oder mehreren der Ansprüche 15 bis 26,
**dadurch gekennzeichnet,**
- **dass** der Schaltkreis auf einem gemeinsamen Substrat integriert ist und insbesondere ein Hochfrequenzschaltkreis ist, und/oder
- **dass** die Steuereinrichtung ein Host und insbesondere ein Basisbandprozessor ist.

## Claims

1. Circuit having
- a first input (CLK) for reception of a clock signal (TWB_CLK, I2RF_CLK),
- a second input (DATA) for reception of a data word (TWB_DATA, I2RF_DATA), which is emitted from a control device and has information about a read or write access to the circuit,
- a third input (STROBE) for reception of an enable signal (TWB_DATA_EN_N, I2RF_DATA is at EN_N), which has a predetermined value during the transmission of the data word (TWB_DATA, I2RF_DATA), and
- a determination unit (CLK_CNT, RW_DECODE), which is designed such that, on the basis of the number of clock cycles of the clock signal (TWB_CLK, I2RF_CLK) during which the enable signal (TWB_DATA_EN_N, I2RF_DATA_EN_N) is at the predetermined value, it determines the digital interface standard on which the data word (TWB_DATA, I2RF_DATA) transmitted during these clock cycles is based.

2. The circuit as claimed in Claim 1,
**characterized**
- **in that** the word length of the data word (TWB_DATA, I2RF_DATA) depends on the digital interface standard on which it is based, and
- **in that** one or more word lengths is or are predetermined for the digital interface standards which may be used for the transmission of the data word (TWB_DATA, I2RF_DATA).

3. Circuit according to Claim 1 or 2,
**characterized**
- **in that** the determination unit (CLK_CNT, RW_DECODE) is also designed such that, on the basis of the number of clock cycles of the clock signal (TWB_CLK, I2RF_CLK), during which the enable signal (TWB_DATA_EN_N, I2RF_DATA_EN_N) is at the predetermined value, it determines whether a read or a write access is linked to that data word (TWB_DATA, I2RF_DATA).

4. Circuit according to Claim 3,
**characterized**
- **in that** the word length of the data word (TWB_DATA, I2RF_DATA) depends on whether a read or a write access is associated with the data word (TWB_DATA, I2RF_DATA).

5. Circuit according to one or more of the preceding claims,
**characterized**
- **in that** the determination unit (CLK_CNT, RW_DECODE) is also designed such that, on the basis of the number of clock cycles of the clock signal (TWB_CLK, I2RF_CLK), during which the enable signal (TWB_DATA_EN_N, I2RF_DATA_EN_N) is at the predetermined value, it determines whether an error has occurred during the transmission of the data word (TWB_DATA, I2RF_DATA).

6. Circuit according to one or more of the preceding claims,
**characterized**
- **in that** the data word (TWB_DATA, I2RF_DATA) has address information about the address at which the data to be read or to be written is stored or is intended to be stored, with the data word (TWB_DATA, I2RF_DATA) in particular having a predetermined number of address bits.

7. Circuit according to one or more of the preceding claims,
**characterized**
- **in that** the data word (TWB_DATA, I2RF_DATA) for a write access comprises the data to be written, with the data word (TWB_DATA, I2RF_DATA) for a write access having, in particular, a predetermined number of data bits.

8. Circuit according to one or more of the preceding claims,
**characterized**
- **in that** the data word (TWB_DATA, I2RF_DATA) has control information about whether a read or a write access is carried out as a function of the interface standard on which it is based.

9. Circuit according to Claims 5 and 8,
**characterized**
- **in that** the determination unit (CLK_CNT, RW_DECODE) is also designed such that, on the basis of the control information, it determines whether an error has occurred during the transmission of the data word (TWB_DATA, I2RF_DATA).

10. Circuit according to one or more of the preceding claims,
**characterized**
- **in that** the circuit has a shift register (SR), to which a received data word (TWB_DATA, I2RF_DATA) is written.

11. Circuit according to one or more of the preceding claims,
**characterized**
- **in that** the clock signal (TWB_CLK, I2RF_CLK) is produced by the control device.

12. Circuit according to one or more of the preceding claims,
**characterized**
- **in that** one of the digital interface standards is the DigRF Standard.

13. Circuit according to one or more of the preceding claims,
**characterized**
- **in that** the circuit is integrated on a common substrate and, in particular, is a radio-frequency circuit, and/or
- **in that** the control device is a host and, in particular, a baseband processor.

14. System for production of read or write accesses, having a control device for production of a data word (TWB_DATA, I2RF_DATA), which has information about a read or write access, and having a circuit according to one or more of the preceding claims, which receives the data word (TWB_DATA, I2RF_DATA).

15. Method for determination of a digital interface standard on which a read or write access by a control device to a circuit is based, having the following steps:
(a) reception of a clock signal (TWB_CLK,I2RF_CLK) by the circuit;
(b) reception of a data word (TWB_DATA, I2RF_DATA) by the circuit, with the data word (TWB_DATA, I2RF_DATA) being emitted from the control device and having information about a read or write access to the circuit;
(c) reception of an enable signal (TWB_DATA_EN_N, I2RF_DATA_EN_N) by the circuit, with the enable signal (TWB_DATA_EN_N, I2RF_DATA_EN_N) being at a predetermined value during the transmission of the data word (TWB_DATA, I2RF_DATA); and
(d) determination of the digital interface standard on which the transmitted data word (TWB_DATA, I2RF_DATA) is based, on the basis of the number of clock cycles of the clock signal (TWB_CLK, I2RF_CLK) during which the enable signal (TWB_DATA_EN_N, I2RF_DATA_EN_N) is at the predetermined value.

16. Method according to Claim 15,
**characterized**
- **in that** the word length of the data word (TWB_DATA, I2RF_DATA) depends on the digital interface standard on which it is based, and
- **in that** one or more word lengths is or are predetermined for the digital interface standards which may be used for the transmission of the data word (TWB_DATA, I2RF_DATA).

17. Method according to Claim 15 or 16,
**characterized**
- **in that** the number of clock cycles of the clock signal (TWB_CLK, I2RF_CLK) during which the enable signal (TWB_DATA_EN_N, I2RF_DATA_EN_N) is at the predetermined value is used to determine whether a read or a write access is associated with the data word (TWB DATA,_I2RF_DATA).

18. Method according to Claim 17,
**characterized**
- **in that** the word length of the data word (TWB_DATA, I2RF_DATA) depends on whether a read or a write access is associated with the data word (TWB_DATA, I2RF_DATA).

19. Method according to one or more of Claims 15 to 18,
**characterized**
- **in that** the number of clock cycles of the clock signal (TWB_CLK, I2RF_CLK) during which the enable signal (TWB_DATA_EN_N, I2RF_DATA_EN_N) is at the predetermined value is used to determine whether an error has occurred during the transmission of the data word (TWB_DATA, I2RF_DATA).

20. Method according to one or more of Claims 15 to 19,
**characterized**
- **in that** the data word (TWB_DATA, I2RF_DATA) has address information about the address at which the data to be read or to be written is stored or is intended to be stored, with the data word (TWB_DATA, I2RF_DATA) in particular having a predetermined number of address bits.

21. Method according to one or more of Claims 15 to 20,
**characterized**
- **in that** the data word (TWB_DATA, I2RF_DATA) for a write access comprises the data to be written, with the data word (TWB_DATA, I2RF_DATA) for a write access having, in particular, a predetermined number of data bits.

22. Method according to one or more of Claims 15 to 21,
**characterized**
- **in that** the data word (TWB_DATA, I2RF_DATA) has control information about whether a read or a write access is carried out as a function of the interface standard on which it is based.

23. Method according to Claims 19 and 22,
**characterized**
- **in that** the control information is used to determine whether an error has occurred during the transmission of the data word (TWB_DATA, I2RF_DATA).

24. Method according to one or more of Claims 15 to 23,
**characterized**
- **in that** the circuit has a shift register (SR) to which a received data word (TWB_DATA, I2RF_DATA) is written.

25. Method according to one or more of Claims 15 to 24,
**characterized**
- **in that** the clock signal (TWB_CLK, I2RF_CLK) is produced by the control device.

26. Method according to one or more of Claims 15 to 25,
**characterized**
- **in that** one of the digital interface standards is the DigRF Standard.

27. Method according to one or more of Claims 15 to 26
**characterized**
- **in that** the circuit is integrated on a common substrate and, in particular, is a radio-frequency circuit, and/or
- **in that** the control device is a host and, in particular, a baseband processor.

## Revendications

1. Circuit comprenant
- une première entrée (CLK) de réception d'un signal (TWB_CLK, I2RF_CLK) d'horloge,
- une deuxième entrée (DATA) de réception d'un mot (TWB_DATA, I2RF_DATA) de données, qui est émis par un dispositif de commande et qui comprend des informations sur un accès en lecture ou en écriture au circuit,
- une troisième entrée (STROBE) de réception d'un signal (TWB_DATA_EN_N, I2FR_DATA_EN_N) de libération, qui a une valeur prescrite pendant la transmission du mot (TWB_DATA, I2RF_DATA) de données, et
- une unité (CLK_CNT, RW_DECODE) de détermination, qui est telle que, au moyen du nombre des cadences du signal (TWB_CLK, I2RF_CLK) d'horloge, pendant lesquelles le signal (TWB_DATA_EN_N, I2RF_DATA_EN_N) de libération a la valeur prescrite, elle détermine celle des normes d'interface numérique qui est à la base du mot (TWB_DATA, I2RF_DATA) de données transmis pendant ces cadences.

2. Circuit suivant la revendication 1,
**caractérisé**
- **en ce que** la largeur du mot (TWB_DATA, I2RF_DATA) de données dépend de la norme d'interface numérique qui en est à la base, et
- **en ce que**, pour les normes d'interface numérique qui entrent en ligne de compte pour la transmission du mot (TWB_DATA, I2RF_DATA) de données, il est prescrit respectivement une ou plusieurs largeurs du mot.

3. Circuit suivant la revendication 1 ou 2,
**caractérisé**
- **en ce que** l'unité (CLK_CNT, RW_DECODE) de détermination est réalisée, en outre, de manière à déterminer, au moyen du nombre des cadences du signal (TWB_CLK, I2RF_CLK) d'horloge, pendant lesquelles le signal (TWB_DATA_EN_N, I2RF_DATA_EN_N) de libération a la valeur prescrite, si un accès en lecture ou un accès en écriture est relié au mot (TWB_DATA_, I2RF_DATA) de données.

4. Circuit suivant la revendication 3,
**caractérisé**
- **en ce que** la largeur du mot (TWB_DATA, I2RF_DATA) de données dépend du point de savoir si un accès en lecture ou un accès en écriture est relié au mot (TWB_DATA, I2RF_DATA) de données.

5. Circuit suivant l'une ou plusieurs des revendications précédentes,
**caractérisé**
- **en ce que** l'unité (CLK_CNT, RW_DECODE) de détermination est réalisée, en outre, de manière à déterminer, au moyen du nombre des cadences du signal (TWB_CLK, I2RF_CLK) de cadence, pendant lesquelles le signal (TWB_DATA_EN_N, I2RF_DATA_EN_N) de libération a la valeur prescrite, s'il se produit une erreur dans la transmission du mot (TWB_DATA, I2RF_DATA) de données.

6. Circuit suivant l'une ou plusieurs des revendications précédentes,
**caractérisé**
- **en ce que** le mot (TWB_DATA, I2RF_DATA) de données comporte, en outre, des informations d'adresse, adresses sous lesquelles les données à lire ou les données à écrire sont mémorisées ou doivent être mémorisées, le mot (TWB_DATA, I2RF_DATA) de données ayant notamment un nombre prescrit de bits d'adresse.

7. Circuit suivant l'une ou plusieurs des revendications précédentes,
**caractérisé**
- **en ce que** le mot (TWB_DATA, I2RF_DATA) de données comprend, lors d'un accès en écriture, des données à écrire, le mot (TWB_DATA, I2RF_DATA) de données ayant, lors d'un accès en écriture, notamment un nombre prescrit de bits de données.

8. Circuit suivant l'une ou plusieurs des revendications précédentes,
**caractérisé**
- **en ce que** le mot (TWB_DATA, I2RF_DATA) de données a, en outre, en fonction de la norme d'interface qui en est à la base, des informations de commande sur le point de savoir si un accès en lecture ou un accès en écriture est effectué.

9. Circuit suivant les revendications 5 et 8,
**caractérisé**
- **en ce que** l'unité (CLK_CNT, RW_DECODE) de détermination est réalisée, en outre, de manière à déterminer, au moyen des informations de commande, si une erreur est apparue lors de la transmission du mot ((TWB_DATA, I2RF_DATA) de données.

10. Circuit suivant l'une ou plusieurs des revendications précédentes,
**caractérisé**
- **en ce que** le circuit a un registre (SR) à décalage, dans lequel un mot (TWB_DATA, I2RF_DATA) de données reçu est écrit.

11. Circuit suivant l'une ou plusieurs des revendications précédentes,
**caractérisé**
- **en ce que** le signal (TWB_CLK, I2RF_CLK) d'horloge est procuré par le dispositif de commande.

12. Circuit suivant l'une ou plusieurs des revendications précédentes,
**caractérisé**
- **en ce que** l'une des normes d'interface numérique est la norme dite DigRF.

13. Circuit suivant l'une ou plusieurs des revendications précédentes,
**caractérisé**
- **en ce que** le circuit est intégré sur un substrat commun et est notamment un circuit à haute fréquence, et/ou
- **en ce que** le dispositif de commande est un hôte et notamment un processeur de bande de base.

14. Système de production d'accès en lecture ou en écriture comprenant un dispositif de commande pour la production d'un mot (TWB_DATA, I2RF_DATA) de données, qui comprend des informations sur un accès en lecture ou un accès en écriture et un circuit suivant l'une ou plusieurs des revendications précédentes, qui reçoit le mot (TWB_DATA, I2RF_DATA) de données.

15. Procédé de détermination d'une norme d'interface numérique, qui est à la base d'un accès en lecture ou en écriture d'un dispositif de commande à un circuit, comprenant les stades :
(a) réception d'un signal (TWB_CLK, I2RF_CLK) d'horloge par le circuit ;
(b) réception d'un mot (TWB_DATA, I2RF_DATA) de données par le circuit, le mot (TWB_DATA, I2RF_DATA) de données étant émis par le dispositif de commande et comprenant des informations sur un accès en lecture ou un accès en écriture au circuit ;
(c) réception d'un signal (TWB_DATA_EN_N, I2RF_DATA_EN_N) d'un signal de libération par le circuit, le signal (TWB_DATA_EN_N, I2RF_DATA_EN_N) de libération ayant, pendant la transmission du mot (TWB_DATA, I2RF_DATA) de données, une valeur prescrite ; et
(d) détermination de la norme d'interface numérique, qui est à la base du mot (TWB_DATA, I2RF_DATA) de données transmis au moyen du nombre des cadences du signal (TWB_CLK, I2RF_CLK) d'horloge, pendant lesquelles le signal (TWB_DATA_EN_N, I2RF_DATA_EN_N) de libération a la valeur prescrite.

16. Procédé suivant la revendication 15,
**caractérisé**
- **en ce que** la largeur du mot (TWB_DATA, I2RF_DATA) de données dépend de la normes d'interface numérique qui en est à la base, et
- **en ce que**, pour les normes d'interface numérique qui entrent en ligne de compte pour la transmission du mot (TWB_DATA, I2RF_DATA) de données, il est prescrit respectivement une ou plusieurs largeurs de mots.

17. Procédé suivant la revendication 15 ou 16,
**caractérisé**
- **en ce que** l'on détermine au moyen du nombre des cadences du signal (TWB_CLK, I2RF_CLK) d'horloge, pendant lesquelles le signal (TWB_DATA_EN_N, I2RF_DATA_EN_N) de libération a la valeur prescrite, si un accès en lecture ou un accès en écriture est relié au mot (TWB_DATA, I2RF_DATA) de données.

18. Procédé suivant la revendication 17,
**caractérisé**
- **en ce que** la largeur du mot (TWB_DATA, I2RF_DATA) de données dépend du point de savoir si un accès en lecture ou un accès en écriture est relié au mot (TWB_DATA, I2RF_DATA) de données.

19. Procédé suivant l'une ou plusieurs des revendications 15 à 18,
**caractérisé**
- **en ce qu'**au moyen du nombre des cadences du signal (TWB_CLK, I2RF_CLK) d'horloge, pendent lesquelles le signal (TWB_DATA_EN_N, I2RF_DATA_EN_N) de libération à la valeur prescrite, on détermine s'il est apparu une erreur dans la transmission du mot (TWB_DATA, I2RF_DATA) de données.

20. Procédé suivant l'une ou plusieurs des revendications 15 à 19,
**caractérisé**
- **en ce que** le mot (TWB_DATA, I2RF_DATA) de données comporte, en outre, des informations d'adresse, adresses sous lesquelles les données à lire ou les données à écrire sont mémorisées ou doivent être mémorisées, le mot (TWB_DATA, I2RF_DATA) de données ayant notamment un nombre prescrit de bits d'adresse.

21. Procédé suivant l'une ou plusieurs des revendications 15 à 20,
**caractérisé**
- **en ce que** le mot (TWB_DATA, I2RF_DATA) de données comprend, lors d'un accès en écriture, des données à écrire, le mot (TWB_DATA, I2RF_DATA) de données ayant, lors d'un accès en écriture, notamment un nombre prescrit de bits de données.

22. Procédé suivant l'une ou plusieurs des revendications 15 à 21,
**caractérisé**
- **en ce que** le mot (TWB_DATA, I2RF_DATA) de données a, en outre, en fonction de la norme d'interface qui en est à la base, des informations de commande sur le point de savoir si un accès en lecture ou un accès en écriture est effectué.

23. Procédé suivant les revendications 19 et 22,
**caractérisé**
- **en ce que** l'on détermine, au moyen des informations de commande, si une erreur est apparue dans la transmission du mot (TWB_DATA, I2RF_DATA) de données.

24. Procédé suivant l'une ou plusieurs des revendications 15 à 23,
**caractérisé**
- **en ce que** le circuit a un registre (SR) à décalage, dans lequel un mot (TWB_DATA, I2RF_DATA) de données reçues est écrit.

25. Procédé suivant l'une ou plusieurs des revendications 15 à 24,
**caractérisé**
- **en ce que** le signal (TWB_CLK, I2RF_CLK) d'horloge est procuré par le dispositif de commande.

26. Procédé suivant l'une ou plusieurs des revendications 15 à 25,
**caractérisé**
- **en ce que** l'une des normes d'interface numérique est la norme dite DigRF.

27. Procédé suivant l'une ou plusieurs des revendications 15 à 26,
**caractérisé**
- **en ce que** le circuit est intégré sur un substrat commun et est notamment un circuit à haute fréquence et/ou
- **en ce que** le dispositif de commande est un hôte et notamment un processeur de bande de base.
